# EUROPEAN PATENT SPECIFICATION

(11) **EP 4 362 130 B1**
(45) Date of publication and mention of the grant of the patent: **01.04.2026**
(21) Application number: 22846296.6
(22) Date of filing: 22.07.2022
(51) Int. Cl.: H01M 4/13, H01M 4/133, H01M 4/131, H01M 4/134, H01M 10/052, H01M 4/02, H01M 4/36, H01M 4/38, H01M 4/485, H01M 4/587

(54) **NEGATIVE ELECTRODE AND SECONDARY BATTERY COMPRISING SAME**
NEGATIVELEKTRODE UND SEKUNDÄRBATTERIE DAMIT
ÉLECTRODE NÉGATIVE ET BATTERIE SECONDAIRE LA COMPRENANT

(30) Priority: 23.07.2021 KR 20210097021
(43) Date of publication of application: 01.05.2024
(73) Proprietor: LG Energy Solution, Ltd., Seoul 07335 (KR)
(72) Inventor: KIM, Sun Kyu, Daejeon 34122 (KR); CHOY, Sang Hoon, Daejeon 34122 (KR)
(74) Representative: Hoffmann Eitle
(86) International application number: PCT/KR2022/010786
(87) International publication number: WO 2023/003426

(56) References cited:
- CN-A- 108 258 193
- CN-A- 112 310 344
- JP-A- 2008 078 109
- JP-A- 2011 119 216
- JP-A- 2020 087 856
- JP-B2- 6 401 589
- JP-B2- 6 401 589
- KR-A- 20150 028 582
- KR-B1- 102 124 105

## Description

### TECHNICAL FIELD

### [Cross-reference to Related Applications]

This application claims priority from Korean Patent Application No. 10-2021-0097021, filed on July 23, 2021.

### [Technical Field]

The present invention relates to a negative electrode and a secondary battery including the same.

### BACKGROUND ART

There is a need to develop battery technology for efficiently storing and utilizing electrical energy as personal IT devices and computer networks are developed with the recent development of information society and the accompanying dependency of society as a whole on the electrical energy is increased.

Particularly, studies of electricity storage devices, such as electric double-layer capacitors and lithium ion batteries, have been extensively conducted as an interest in solving environmental problems and realizing a sustainable circular society emerges. Among them, a lithium secondary battery is in the spotlight as a battery system with the highest theoretical energy density among battery technologies.

The lithium secondary battery generally includes a positive electrode, a negative electrode, a separator disposed between the positive electrode and the negative electrode, an electrolyte, and an organic solvent. Also, with respect to the positive electrode and the negative electrode, an active material layer including a positive electrode active material or a negative electrode active material may be formed on a current collector.

Among these, the negative electrode active material layer is generally prepared by coating a negative electrode current collector with a negative electrode slurry, which is prepared by adding the negative electrode active material or the like to a solvent for forming the negative electrode slurry, and drying and rolling the coated negative electrode current collector. In this case, with respect to the negative electrode active material layer, there is a risk that an end portion forms an inclination due to fluid characteristics of the negative electrode slurry, and, as a result, since it is difficult to achieve desired capacity or a negative electrode loading amount and there is a problem in that lithium is precipitated because the inclined end portion does not sufficiently accept the lithium from the positive electrode facing the inclined end portion, it may cause insufficient capacity, a decrease in charge and discharge efficiency, and a decrease in life characteristics of the lithium secondary battery.

Japanese Patent Application Laid-open Publication No. 2020-167066 discloses a positive electrode for a lithium ion secondary battery, a positive electrode sheet for a lithium ion secondary battery, and a preparation method thereof, but did not suggest an alternative to the above-described problem. CN 108 258 193 A relates to a negative pole piece. The negative pole piece comprises a negative current collector and a negative material layer adhered onto the surface of the negative current collector; the negative material layer comprises a first negative material layer and a second negative material layer; the first negative material layer comprises a first material area and a second material area positioned on the edge of the first material area and is adhered onto the surface of the negative current collector; the thickness of the first material area is greater than that of the second material area; the second negative material layer is adhered onto the surface of the second material area and is positioned on the edge of the first negative material layer.
JP 2020 087856 A describes an electrode sheet that includes a coating part where an active material layer is provided on a long-sized metal foil, and an uncoated part where the metal foil is exposed. The active material layer 12 includes a high density region and a low density region. The high density region is composed of a first active material layer. The low density region is composed of a layer where a second active material layer, having a density lower than that of the first active material layer, is superposed on the first active material layer. The low density region is located between the high density region 13 and the uncoated part.
JP 6401589 B2 describes a lithium secondary battery, a positive electrode mixture layer that includes a first positive electrode mixture layer and second positive electrode mixture layers that adjacent to the first positive electrode mixture layer. The expansion coefficient of the second positive electrode mixture layers when lithium ions enter it is larger than that of the first positive electrode mixture layer; and a positive electrode mixture layer is opposite to part of the first positive electrode mixture layer, but not opposite to the second positive electrode mixture layer. The first positive electrode mixture layer has a center portion opposite to the positive electrode mixture layer, and end portions which are not opposed to the positive electrode mixture layer. The second positive electrode mixture layers are adjacent to the end portions of the first positive electrode mixture layer and therefore, adjacent to the first positive electrode mixture layer.

### [Prior Art Document]

### [Patent Document]

Japanese Patent Application Laid-open Publication No. 2020-167066

### DISCLOSURE OF THE INVENTION

### TECHNICAL PROBLEM

An aspect of the present invention provides a negative electrode capable of improving capacity of the negative electrode and improving the capacity, charge and discharge efficiency, and life characteristics of the negative electrode by preventing precipitation of lithium on a negative electrode side portion.

Another aspect of the present invention provides a secondary battery including the above-described negative electrode.

### TECHNICAL SOLUTION

According to an aspect of the present invention, there is provided a negative electrode as defined in Claim 1.

According to another aspect of the present invention, there is provided a lithium secondary battery including: the above-described negative electrode; a positive electrode; a separator disposed between the negative electrode and the positive electrode; and an electrolyte.

### ADVANTAGEOUS EFFECTS

A negative electrode according to the present invention is characterized in that it includes a first negative electrode active material layer including side portions inclined toward a surface of a negative electrode current collector and second negative electrode active material layers disposed on at least a portion of the side portions, wherein a maximum height of the second negative electrode active material layers based on the surface of the negative electrode current collector is 40% to 95% of a maximum height of the first negative electrode active material layer. With respect to the negative electrode according to the present invention, since the second negative electrode active material layers are formed on the side portions which are formed to have an inclination, insufficient capacity and insufficient loading amount of the negative electrode due to the inclination of the side portions are compensated and a problem of precipitation of lithium that has not been intercalated is prevented, and thus, the capacity of the negative electrode may be improved, and charge and discharge efficiency and life characteristics of the negative electrode and a lithium secondary battery including the same may be improved.

### BRIEF DESCRIPTION OF THE DRAWINGS

FIG. 1 is a side view schematically illustrating a negative electrode of the present invention.
FIG. 2 is a plan view schematically illustrating the negative electrode of the present invention.

### MODE FOR CARRYING OUT THE INVENTION

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression average particle diameter (D₅₀) may be defined as a particle diameter at a cumulative volume of 50% in a particle size distribution curve. The average particle diameter (D₅₀), for example, may be measured by using a laser diffraction method. The laser diffraction method may generally measure a particle diameter ranging from submicrons to a few mm and may obtain highly repeatable and high-resolution results.

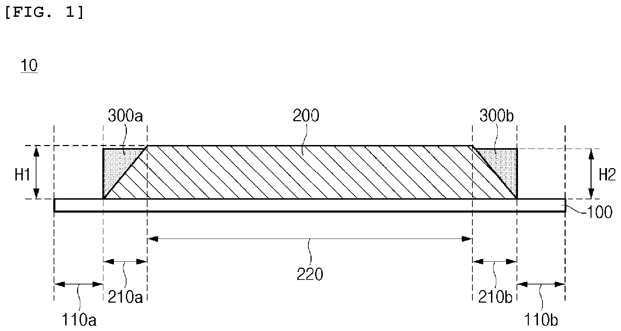

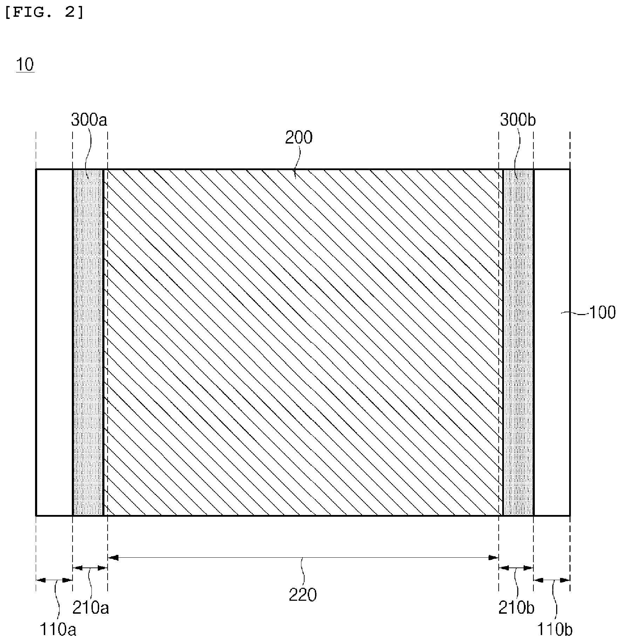

Hereinafter, a negative electrode of the present invention will be described in detail with reference to the accompanying drawings. Specifically, FIG. 1 is a side view for explaining the negative electrode of the present invention, and FIG. 2 is a plan view for explaining the negative electrode of the present invention. In adding reference numerals to components of each drawing, it should be noted that the same reference numerals may be assigned to the same components as much as possible even though they are shown in different drawings.

### Negative Electrode

The present invention provides a negative electrode 10. Specifically, the negative electrode 10 may be a negative electrode for a lithium secondary battery.

The negative electrode 10 according to the present invention is characterized in that it includes a negative electrode current collector 100; a first negative electrode active material layer 200 which is disposed on at least one surface of the negative electrode current collector 100 and includes a first negative electrode active material; and second negative electrode active material layers 300a and 300b including a second negative electrode active material, wherein the first negative electrode active material layer 200 includes side portions 210a and 210b partitioned on both sides and a central portion 220 partitioned except for the side portions 210a and 210b, the side portions 210a and 210b have an inclination toward a surface of the negative electrode current collector 100, the second negative electrode active material layers 300a and 300b are disposed on at least a portion of the side portions 210a and 210b, and a maximum height of the second negative electrode active material layers 300a and 300b based on the surface of the negative electrode current collector 100 is 40% to 95% of a maximum height of the first negative electrode active material layer 200.

In general, a negative electrode active material layer included in a negative electrode is generally prepared by coating a negative electrode current collector with a negative electrode slurry, which is prepared by adding a negative electrode active material or the like to a solvent for forming the negative electrode slurry, and drying and rolling the coated negative electrode current collector. In this case, as long as the negative electrode slurry has fluid characteristics, a side portion or end portion of the formed negative electrode active material layer is inclined toward a surface of the negative electrode current collector. Since the negative electrode active material layer is not sufficiently loaded on the side portion having such an inclination, insufficient capacity of the negative electrode is not only caused, but lithium ions transferred from a positive electrode are also not sufficiently intercalated, and thus, it causes a problem of external precipitation of lithium. The lithium precipitation presents a problem of not only reducing charge and discharge efficiency of a lithium secondary battery, but also significantly degrading life characteristics.

In order to solve this problem, the present invention is characterized in that a first negative electrode active material layer including side portions inclined toward the surface of the negative electrode current collector and second negative electrode active material layers disposed on at least a portion of the side portions are included, and a maximum height of the second negative electrode active material layers based on the surface of the negative electrode current collector is 40% to 95% of a maximum height of the first negative electrode active material layer. With respect to the negative electrode according to the present invention, since the second negative electrode active material layers are formed on the side portions which are formed to have an inclination, insufficient capacity and insufficient loading amount of the negative electrode due to the inclination of the side portions are compensated and a problem of precipitation of lithium that has not been intercalated is prevented, and thus, degradation of a cell is prevented, and charge and discharge efficiency and life characteristics of the negative electrode and a lithium secondary battery including the same may be improved.

The negative electrode current collector 100 is not particularly limited as long as it has high conductivity without causing adverse chemical changes in the battery. Specifically, the negative electrode current collector 100 may include at least one selected from the group consisting of copper, stainless steel, aluminum, nickel, titanium, fired carbon, and an aluminum-cadmium alloy, and may specifically include copper.

The negative electrode current collector 100 may typically have a thickness of 3 µm to 500 µm.

Microscopic irregularities may be formed on the surface of the negative electrode current collector 100 to improve adhesion of the negative electrode active material. For example, the negative electrode current collector may be used in various shapes such as that of a film, a sheet, a foil, a net, a porous body, a foam body, a non-woven fabric body, and the like.

The first negative electrode active material layer 200 is disposed on at least one surface of the negative electrode current collector 100. Specifically, the first negative electrode active material layer 200 may be disposed on one surface or both surfaces of the negative electrode current collector 100.

The first negative electrode active material layer may include the side portions 210a and 210b partitioned on both sides and the central portion 220 partitioned except for the side portions 210a and 210b. In the present specification, the side portions 210a and 210b and the central portion 220 may be abstractly partitioned to specify formation positions of the second negative electrode active material layers 300a and 300b to be described later as shown in FIGS. 1 and 2. For example, the side portions 210a and 210b and the central portion 220 may have the same composition or may be prepared with the same negative electrode slurry.

As shown in FIG. 1, the side portions 210a and 210b may have an inclination toward the surface of the negative electrode current collector 100. The inclination of the side portions 210a and 210b, for example, may be formed according to fluid characteristics of the negative electrode slurry when the negative electrode slurry is applied to prepare the first negative electrode active material layer. Since this inclination of the side portions causes insufficient capacity and insufficient loading amount of the negative electrode and insufficient intercalation of lithium ions moved from the positive electrode, there is a risk that problems of decreases in capacity, charge and discharge efficiency, and life characteristics of the negative electrode occur, but these problems are prevented due to the presence of the second negative electrode active material layers 300a and 300b to be described later and an effect of improving the capacity, charge and discharge efficiency, and life characteristics of the negative electrode may be achieved.

Inclination angle and width of the side portions 210a and 210b, for example, may be determined by viscosity, application conditions, and drying conditions of the negative electrode slurry for preparing the first negative electrode active material layer, and are not particularly limited.

The central portion 200 may be a region partitioned except for the side portions 210a and 210b of the first negative electrode active material layer. Specifically, the central portion 200 may have substantially no inclination or may form a flat surface.

The first negative electrode active material layer 200 may include a first negative electrode active material.

The first negative electrode active material is a material capable of reversibly intercalating/deintercalating lithium, wherein it may include at least one selected from a carbon-based active material and a (semi)metal-based active material.

The carbon-based active material may include at least one selected from the group consisting of artificial graphite, natural graphite, hard carbon, soft carbon, carbon black, graphene, and fibrous carbon.

The (semi)metal-based active material may include at least one selected from the group consisting of: at least one (semi)metal selected from the group consisting of lithium (Li), copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), vanadium (V), titanium (Ti), and tin (Sn); an alloy of lithium and at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; a composite of carbon and the at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; and an oxide of the at least one (semi)metal selected from the group consisting of Li, Cu, Ni, Na, K, Rb, Cs, Fr, Be, Mg, Ca, Sr, Si, Sb, Pb, In, Zn, Ba, Ra, Ge, Al, V, Ti, and Sn.

The first negative electrode active material layer may include the first negative electrode active material in an amount of 60 wt% or more, for example, 60 wt% to 99 wt%.

The first negative electrode active material layer 200 may include at least one selected from a binder and a conductive agent together with the first negative electrode active material.

The binder is used to improve performance of the battery by improving adhesion between the negative electrode active material layer and the negative electrode current collector, wherein, for example, the binder may include at least one selected from the group consisting of polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, a styrene-butadiene rubber (SBR), a fluorine rubber, and a material having hydrogen thereof substituted with lithium (Li), sodium (Na), or calcium (Ca), or may include various copolymers thereof.

The binder may be included in an amount of 0.5 wt% to 20 wt% in the first negative electrode active material layer.

The conductive agent is not particularly limited as long as it has conductivity without causing adverse chemical changes in the battery, wherein, for example, a conductive material, such as: graphite such as natural graphite or artificial graphite; carbon black such as carbon black, acetylene black, Ketjen black, channel black, furnace black, lamp black, and thermal black; conductive fibers such as carbon fibers and metal fibers; conductive tubes such as carbon nanotubes; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 0.5 wt% to 20 wt% in the first negative electrode active material layer.

A height or thickness of the first negative electrode active material layer based on the surface of the negative electrode current collector may be in a range of 10 µm to 300 µm, for example, 50 µm to 150 µm.

The second negative electrode active material layers 300a and 300b may be disposed on at least a portion of the side portions 210a and 210b. Specifically, the second negative electrode active material layers 300a and 300b may be disposed on the side portions 210a and 210b along inclined surfaces of the side portions 210a and 210b.

Through the disposition of the second negative electrode active material layers, since the insufficient capacity and insufficient loading amount of the negative electrode due to the inclination of the side portions 210a and 210b of the first negative electrode active material layer 200 are prevented and the problem of the precipitation of lithium on the side portions is prevented, the effect of improving the capacity, charge and discharge efficiency, and life characteristics of the negative electrode may be achieved.

In the present invention, a maximum height H2 of the second negative electrode active material layers 300a and 300b based on the surface of the negative electrode current collector 100 is 40% to 95% of a maximum height H1 of the first negative electrode active material layer. That is, a maximum distance between the second negative electrode active material layers 300a and 300b formed or disposed on the side portions 210a and 210b and the surface of the negative electrode current collector 100 may not be greater than a maximum distance between the first negative electrode active material layer 200 and the surface of the negative electrode current collector 100, and, accordingly, overall flatness of the negative electrode is achieved, and a problem, in which structural stability of the negative electrode is reduced because the maximum height of the second negative electrode active material layers is greater than the maximum height of the first negative electrode active material layer, may be prevented.

In the present specification, the expression "based on the surface of the negative electrode current collector" refers to the surface of the negative electrode current collector in which the negative electrode current collector and the first negative electrode active material layer are in contact with each other as shown in FIG. 1.

The second negative electrode active material layers 300a and 300b may include a second negative electrode active material.

The second negative electrode active material is a material capable of reversibly intercalating/deintercalating lithium, wherein it may include at least one selected from a carbon-based active material and a (semi)metal-based active material.

The carbon-based active material may include at least one selected from the group consisting of artificial graphite, natural graphite, hard carbon, soft carbon, carbon black, graphene, and fibrous carbon.

The (semi)metal-based active material may include at least one selected from the group consisting of: at least one (semi)metal selected from the group consisting of Li, Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; a composite of carbon and the at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; and an oxide of the at least one (semi)metal selected from the group consisting of Li, Cu, Ni, Na, K, Rb, Cs, Fr, Be, Mg, Ca, Sr, Si, Sb, Pb, In, Zn, Ba, Ra, Ge, Al, V, Ti, and Sn.

More specifically, the second negative electrode active material may include at least one silicon-based active material selected from SiOₓ (0≤x<2) and a silicon-carbon composite. Since the silicon-based active material has excellent capacity, the above-described effect of improving the capacity of the negative electrode may be more preferably achieved.

The second negative electrode active material may include a lithium titanium oxide (LTO), and, in this case, the capacity of the negative electrode may be improved, and it is desirable in terms of the fact that the lithium precipitation may be mitigated by increasing ionic conductivity of the second negative electrode active material layers.

The second negative electrode active material may be the same as or different from the above-described first negative electrode active material.

More specifically, capacity per weight of the second negative electrode active material may be greater than capacity per weight of the first negative electrode active material, and, in this case, the insufficient loading amount or insufficient capacity of the negative electrode due to the inclination of the side portions of the first negative electrode active material layer may be compensated with a more desirable level.

The capacity per weight of the second negative electrode active material may be greater than the capacity per weight of the first negative electrode active material, as the maximum height H2 of the second negative electrode active material layers 300a and 300b based on the surface of the negative electrode current collector 100 is 40% to 95% of the maximum height H1 of the first negative electrode active material layer 200. Specifically, in the case that the capacity per weight of the second negative electrode active material is greater than the capacity per weight of the first negative electrode active material, since a degree of volume expansion of the second negative electrode active material may be greater than a degree of volume expansion of the first negative electrode active material due to lithium intercalation, a decrease in the structural stability of the negative electrode due to volume expansion of the second negative electrode active material layers during charge and discharge of the negative electrode may be prevented by adjusting the maximum height H2 of the second negative electrode active material layers to be 40% to 95% of the maximum height H1 of the first negative electrode active material layer.

The first negative electrode active material may include the carbon-based active material and the second negative electrode active material may include the silicon-based active material, as the maximum height H2 of the second negative electrode active material layers 300a and 300b based on the surface of the negative electrode current collector 100 is 40% to 95% of the maximum height H1 of the first negative electrode active material layer 200.

The second negative electrode active material layers 300a and 300b may include the second negative electrode active material in an amount of 60 wt% or more, for example, 60 wt% to 99 wt%.

The second negative electrode active material layers 300a and 300b may include at least one selected from a binder and a conductive agent together with the second negative electrode active material.

The binder is used to improve the performance of the battery by improving the adhesion between the negative electrode active material layer and the negative electrode current collector, wherein, for example, the binder may include at least one selected from the group consisting of polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, a styrene-butadiene rubber (SBR), a fluorine rubber, and a material having hydrogen thereof substituted with Li, Na, or Ca, or may include various copolymers thereof.

The binder may be included in an amount of 0.5 wt% to 20 wt% in the second negative electrode active material layer.

The conductive agent is not particularly limited as long as it has conductivity without causing adverse chemical changes in the battery, wherein, for example, a conductive material, such as: graphite such as natural graphite or artificial graphite; carbon black such as carbon black, acetylene black, Ketjen black, channel black, furnace black, lamp black, and thermal black; conductive fibers such as carbon fibers and metal fibers; conductive tubes such as carbon nanotubes; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 0.5 wt% to 20 wt% in the second negative electrode active material layer.

In the present invention, the negative electrode current collector may include uncoated portions 110a and 110b. The uncoated portions 110a and 110b are those in which the negative electrode active material layers (the first negative electrode active material layer and the second negative electrode active material layers) are not disposed on the negative electrode current collector.

Specifically, as shown in FIGS. 1 and 2, the negative electrode current collector includes the uncoated portions 110a and 110b located on both sides, in which the first negative electrode active material layer 200 and the second negative electrode active material layers 300a and 300b are not disposed, wherein the side portions 210a and 210b are adjacent to the uncoated portions 110a and 110b, and the central portion 220 may be spaced apart from the uncoated portions 110a and 110b.

Also, the present invention provides a method of preparing the above-described negative electrode.

Specifically, the method of preparing the negative electrode of the present invention may include the steps of: applying a first negative electrode slurry including a first negative electrode active material and a solvent for forming a negative electrode slurry on a negative electrode current collector; and forming second negative electrode active material layers on side portions of the applied first negative electrode slurry.

The first negative electrode slurry may further include at least one selected from a binder and a conductive agent together with the first negative electrode active material.

The solvent for forming a negative electrode slurry may include at least one selected from the group consisting of N-methyl-2-pyrrolidone (NMP), distilled water, ethanol, methanol, and isopropyl alcohol, preferably, distilled water.

The forming of the second negative electrode active material layers may be performed simultaneously with the applying of the first negative electrode slurry, or may be performed after the applying of the first negative electrode slurry.

In a case in which the forming of the second negative electrode active material layers is performed after the applying of the first negative electrode slurry, the forming of the second negative electrode active material layers may be performed before drying after the applying of the first negative electrode slurry, or may be performed after the applying of the first negative electrode slurry and drying.

After preparing a second negative electrode slurry including a second negative electrode active material and a solvent for forming a negative electrode slurry, the forming of the second negative electrode active material layers may be performed by applying the second negative electrode slurry to the side portions of the applied first negative electrode slurry. The application method is not particularly limited, and may be spray coating, slot die coating, gravure coating, or curtain coating. The second negative active material layers may also be formed by a method in which a film is prepared in advance by using the second negative electrode slurry and the film is transferred to the side portions of the applied first negative electrode slurry.

### Lithium Secondary Battery

Also, the present invention provides a lithium secondary battery including the above-described negative electrode.

Specifically, the lithium secondary battery includes the above-described negative electrode; a positive electrode; a separator disposed between the negative electrode and the positive electrode; and an electrolyte.

The positive electrode may include a positive electrode current collector; and a positive electrode active material layer formed on the positive electrode current collector.

The positive electrode current collector is not particularly limited as long as it has high conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode current collector may generally have a thickness of 3 µm to 500 µm.

The positive electrode active material layer is formed on the positive electrode current collector, and includes a positive electrode active material.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li (Niₚ₂Co_{q2}Mnᵣ₃M_{S2})O₂ (where M is selected from the group consisting of aluminum (Al), iron (Fe), vanadium (V), chromium

(Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a mixture of two or more thereof may be included. Among these materials, in terms of the improvement of capacity characteristics and stability of the battery, the lithium composite metal oxide may be LiCoO₂, LiMnO₂, LiNiO₂, lithium nickel manganese cobalt oxide (e.g., Li(Ni_{0.6}Mn_{0.2}Co_{0.2})O₂, Li(Ni_{0.5}Mn_{0.3}Co_{0.2})O₂, or Li(Ni_{0.8}Mn_{0.1}C_{0.1})O₂, etc.), or lithium nickel cobalt aluminum oxide (e.g., Li(Ni_{0.8}Co_{0.15}Al_{0.05})O₂, etc.).

The positive electrode active material may be included in an amount of 80 wt% to 99 wt% based on a total weight of the positive electrode active material layer.

The positive electrode active material layer may optionally further include at least one additive selected from the group consisting of a binder and a conductive agent in addition to the above-described positive electrode active material.

The binder is a component that assists in binding between the conductive agent and the active material and in binding with the current collector, wherein the binder is commonly added in an amount of 1 wt% to 30 wt% based on the total weight of the positive electrode active material layer. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer (EPDM), a sulfonated EPDM, a styrene-butadiene rubber, a fluoro rubber, and various copolymers.

Any conductive agent may be used without particular limitation so long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may be acetylene black-based products (Chevron Chemical Company, Denka black (Denka Singapore Private Limited), or Gulf Oil Company), Ketjen black, ethylene carbonate (EC)-based products (Armak Company), Vulcan XC-72 (Cabot Company), and Super P (Timcal Graphite & Carbon).

The conductive agent may be included in an amount of 1 wt% to 30 wt% based on the total weight of the positive electrode active material layer.

After a positive electrode slurry is prepared by adding the positive electrode active material as well as optionally the additive including the binder and/or the conductive agent to a solvent, the positive electrode active material layer may be prepared by applying the positive electrode slurry on the positive electrode current collector and rolling and drying the coated positive electrode current collector.

The solvent may include an organic solvent, such as N-methyl-2-pyrrolidone (NMP), and may be used in an amount such that desirable viscosity is obtained when the positive electrode active material as well as optionally the binder and the conductive agent are included. For example, the solvent may be included in an amount such that a concentration of a solid content including the positive electrode active material as well as optionally the binder and the conductive agent is in a range of 50 wt% to 95 wt%, for example, 70 wt% to 90 wt%.

In the lithium secondary battery, the separator separates the negative electrode and the positive electrode and provides a movement path of lithium ions, wherein any separator may be used without particular limitation as long as it is typically used as a separator in a lithium secondary battery, and particularly, a separator having high moisture-retention ability for an electrolyte solution as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, and a low-viscosity linear carbonate-based compound (e.g., ethylmethyl carbonate, dimethyl carbonate, or diethyl carbonate) may be used, said mixture may increase charge/discharge performance of the battery. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

As described above, the secondary battery according to the present invention is suitable for portable devices, such as mobile phones, notebook computers, and digital cameras, and electric cars such as hybrid electric vehicles (HEVs) and, particularly, may be preferably used as a constituent battery of a medium and large sized battery module. Thus, the present invention also provides a medium and large sized battery module including the above-described secondary battery as a unit cell.

The medium and large sized battery module may be preferably used in power sources that require high output and large capacity, such as an electric vehicle, a hybrid electric vehicle, and a power storage system.

### [Description of the Symbols]

10: Lithium Secondary Battery; 100: Negative Electrode Current Collector; 110a, 110b: Uncoated Portion; 200: First Negative Electrode Active Material Layer; 210a, 210b: Side Portion; 220: Central Portion; 300a, 300b: Second Negative Electrode Active Material Layer; H1: Maximum Height of the First Negative Electrode Active Material Layer Based On the Surface of the Negative Electrode Current Collector; H2: Maximum Height of the Second Negative Electrode Active Material Layer Based On the Surface of the Negative Electrode Current Collector.

## Claims

1. A negative electrode comprising:
a negative electrode current collector (100);
a first negative electrode active material layer (200) which is disposed on at least one surface of the negative electrode current collector(100) and includes a first negative electrode active material; and
second negative electrode active material layers (300a, 300b) including a second negative electrode active material,
wherein the first negative electrode active material layer (200) comprises side portions (210a, 210b) partitioned on both sides and a central portion (220) partitioned except for the side portions (210a, 210b),
the side portions (210a, 210b) have an inclination toward a surface of the negative electrode current collector (100),
the second negative electrode active material layers (300a, 300b) are disposed on at least a portion of the side portions (210a, 210b), and **characterized in that**
a maximum height (H2) of the second negative electrode active material layers (300a, 300b) based on the surface of the negative electrode current collector (100) is 40% to 95% of a maximum height (H1) of the first negative electrode active material layer (200).

2. The negative electrode of claim 1, wherein capacity per weight of the second negative electrode active material is greater than capacity per weight of the first negative electrode active material.

3. The negative electrode of claim 1, wherein the first negative electrode active material and the second negative electrode active material each independently comprises at least one selected from i. a carbon-based active material and ii. a metal-based active material or a semi-metal based active material.

4. The negative electrode of claim 3, wherein the carbon-based active material comprises at least one selected from the group consisting of artificial graphite, natural graphite, hard carbon, soft carbon, carbon black, graphene, and fibrous carbon.

5. The negative electrode of claim 3, wherein the metal-based active material or semi-metal based active material comprises at least one selected from the group consisting of: at least one metal or semi-metal selected from the group consisting of lithium (Li), copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), vanadium (V), titanium (Ti), and tin (Sn); an alloy of lithium and at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; a composite of carbon and the at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; and an oxide of the at least one (semi)metal selected from the group consisting of Li, Cu, Ni, Na, K, Rb, Cs, Fr, Be, Mg, Ca, Sr, Si, Sb, Pb, In, Zn, Ba, Ra, Ge, Al, V, Ti, and Sn.

6. The negative electrode of claim 1, wherein the second negative electrode active material comprises at least one silicon-based active material selected from SiOₓ, wherein 0≤x<2, and a silicon-carbon composite.

7. The negative electrode of claim 1, wherein the second negative electrode active material comprises a lithium titanium oxide.

8. The negative electrode of claim 1, wherein the negative electrode current collector (100) comprises uncoated portions located on both sides, in which the first negative electrode active material layer (200) and the second negative electrode active material layers (300a, 300b) are not disposed,
wherein the side portions (210a, 210b) are adjacent to the uncoated portions, and the central portion (220) is spaced apart from the uncoated portions.

9. A secondary battery comprising:
the negative electrode of claim 1;
a positive electrode;
a separator disposed between the negative electrode and the positive electrode; and
an electrolyte.

## Patentansprüche

1. Negative Elektrode, umfassend:
einen Negativelektroden-Stromabnehmer (100);
eine erste Negativelektroden-Aktivmaterialschicht (200), die auf zumindest einer Oberfläche des Negativelektroden-Stromabnehmers (100) angeordnet ist und ein erstes Negativelektroden-Aktivmaterial umfasst; und
zweite Negativelektroden-Aktivmaterialschichten (300a, 300b), umfassend ein zweites Negativelektroden-Aktivmaterial,
worin die erste Negativelektroden-Aktivmaterialschicht (200) Seitenbereiche (210a, 210b), die auf beiden Seiten abgeteilt sind, und einen Zentralbereich (220), der mit Ausnahme der Seitenbereiche (210a, 210b) abgeteilt ist,
wobei die Seitebereiche (210a, 210b) eine Neigung zur Oberfläche des Negativelektroden-Stromabnehmers (100) aufweisen,
die zweiten Negativelektroden-Aktivmaterialschichten (300a, 300b) auf zumindest einem Teil der Seitenbereiche (210a, 210b) angeordnet sind, und **dadurch gekennzeichnet, dass**
die maximale Höhe (H2) der zweiten Negativelektroden-Aktivmaterialschichten (300a, 300b), bezogen auf die Oberfläche des Negativelektroden-Stromabnehmers (100), 40 % bis 95 % der maximalen Höhe (H1) der ersten Negativelektroden-Aktivmaterialschicht (200) beträgt.

2. Negative Elektrode gemäß Anspruch 1, worin die gewichtsbezogene Kapazität des zweiten Negativelektroden-Aktivmaterials größer ist als die gewichtsbezogene Kapazität des ersten Negativelektroden-Aktivmaterials.

3. Negative Elektrode gemäß Anspruch 1, worin das erste Negativelektroden-Aktivmaterial und das zweite Negativelektroden-Aktivmaterial jeweils unabhängig zumindest eines umfassen, ausgewählt aus i. einem Aktivmaterial auf Kohlenstoffbasis und ii. einem Aktivmaterial auf Metallbasis oder einem Aktivmaterial auf Halbmetallbasis.

4. Negative Elektrode gemäß Anspruch 3, worin das Aktivmaterial auf Kohlenstoffbasis zumindest eines umfasst, ausgewählt aus der Gruppe bestehend aus künstlichem Graphit, natürlichem Graphit, hartem Kohlenstoff, weichem Kohlenstoff, Ruß, Graphen und faserigem Kohlenstoff.

5. Negative Elektrode gemäß Anspruch 3, worin das Aktivmaterial auf Metallbasis oder das Aktivmaterial auf Halbmetallbasis zumindest eines umfasst, ausgewählt aus der Gruppe bestehend aus: zumindest einem Metall oder Halbmetall, ausgewählt aus der Gruppe bestehend aus Lithium (Li), Kupfer (Cu), Nickel (Ni), Natrium (Na), Kalium (K), Rubidium (Rb), Cäsium (Cs), Francium (Fr), Beryllium (Be), Magnesium (Mg), Calcium (Ca), Strontium (Sr), Silicium (Si), Antimon (Sb), Blei (Pb), Indium (In), Zink (Zn), Barium (Ba), Radium (Ra), Germanium (Ge), Aluminium (Al), Vanadium (V), Titan (Ti) und Zinn (Sn); einer Legierung von Lithium und zumindest einem (Halb)-Metall, ausgewählt aus der Gruppe, bestehend aus Cu, Ni, Na, K, Rb, Cs, Rf, Be, Mg, Ca, Sr, Si, Sb, Pb, In, Zn, Ba, Ra, Ge, Al, V, Ti und Sn; einem Komposit von Kohlenstoff und dem zumindest einem (Halb)-Metall, ausgewählt aus der Gruppe, bestehend aus Cu, Ni, Na, K, Rb, Cs, Fr, Be, Mg, Ca, Sr, Si, Sb, Pb, In, Zn, Ba, Ra, Ge, Al, V, Ti und Sn; und einem Oxid von zumindest einem (Halb)-Metall, ausgewählt aus der Gruppe, bestehend aus Li, Cu, Ni, Na, K, Rb, Cs, Fr, Be, Mg, Ca, Sr, Si, Sb, Pb, In, Zn, Ba, Ra, Ge, Al, V, Ti und Sn.

6. Negative Elektrode gemäß Anspruch 1, worin das zweite Negativelektroden-Aktivmaterial zumindest ein Aktivmaterial auf Siliciumbasis umfasst, ausgewählt aus SiOₓ, worin 0≤x<2 ist, und einem Silicium-Kohlenstoff-Komposit,.

7. Negative Elektrode gemäß Anspruch 1, worin das zweite Negativelektroden-Aktivmaterial ein Lithium-Titanoxid umfasst.

8. Negative Elektrode gemäß Anspruch 1, worin der Negativelektroden-Stromabnehmer (100) unbeschichtete Bereiche umfasst, die auf beiden Seiten lokalisiert sind, worin die erste Negativelektroden-Aktivmaterialschicht (200) und die zweiten Negativelektroden-Aktivmaterialschichten (300a, 300b) nicht angeordnet sind,
worin die Seitenbereiche (210a, 210b) an die unbeschichteten Bereiche angrenzen und der Zentralbereich (220) von den unbeschichteten Bereichen beabstandet ist.

9. Sekundärbatterie, umfassend:
die negative Elektrode gemäß Anspruch 1;
eine positive Elektrode;
einen zwischen der negativen Elektrode und der positiven Elektrode angeordneten Separator; und
einen Elektrolyten.

## Revendications

1. Électrode négative comprenant :
un collecteur de courant d'électrode négative (100) ;
une première couche (200) de matériau actif d'électrode négative qui est disposée sur au moins une surface du collecteur de courant d'électrode négative (100) et inclut un premier matériau actif d'électrode négative ; et
des secondes couches (300a, 300b) de matériau actif d'électrode négative incluant un second matériau actif d'électrode négative,
dans laquelle la première couche (200) de matériau actif d'électrode négative comprend des parties latérales (210a, 210b) délimitées sur les deux côtés et une partie centrale (220) délimitée à l'exception des parties latérales (210a, 210b),
les parties latérales (210a, 210b) présentent une inclinaison vers une surface du collecteur de courant d'électrode négative (100),
les secondes couches (300a, 300b) de matériau actif d'électrode négative sont disposées sur au moins une partie des parties latérales (210a, 210b), et **caractérisée en ce que**
une hauteur maximale (H2) des secondes couches (300a, 300b) de matériau actif d'électrode négative par rapport à la surface du collecteur de courant d'électrode négative (100) est de 40 % à 95 % d'une hauteur maximale (H1) des premières couches (200) de matériau actif d'électrode négative.

2. Électrode négative selon la revendication 1, dans laquelle la capacité massique du second matériau actif d'électrode négative est supérieure à la capacité massique du premier matériau actif d'électrode négative.

3. Électrode négative selon la revendication 1, dans laquelle le premier matériau actif d'électrode négative et le second matériau actif d'électrode négative comprennent chacun indépendamment au moins un élément sélectionné parmi i. un matériau actif à base de carbone et ii. un matériau actif à base de métal ou un matériau actif à base de métalloïde.

4. Électrode négative selon la revendication 3, dans laquelle le matériau actif à base de carbone comprend au moins un élément sélectionné dans le groupe consistant en graphite artificiel, graphite naturel, carbone dur, carbone doux, noir de carbone, graphène, et carbone fibreux.

5. Électrode négative selon la revendication 3, dans laquelle le matériau actif à base de métal ou le matériau actif à base de métalloïde comprend au moins un élément sélectionné dans le groupe consistant en : au moins un métal ou métalloïde sélectionné dans le groupe consistant en lithium (Li), cuivre (Cu), nickel (Ni), sodium (Na), potassium (K), rubidium (Rb), césium (Cs), francium (Fr), béryllium (Be), magnésium (Mg), calcium (Ca), strontium (Sr), silicium (Si), antimoine (Sb), plomb (Pb), indium (In), zinc (Zn), baryum (Ba), radium (Ra), germanium (Ge), aluminium (Al), vanadium (V), titane (Ti), et étain (Sn) ; un alliage de lithium et d'au moins un métal ou métalloïde sélectionné dans le groupe consistant en Cu, Ni, Na, K, Rb, Cs, Fr, Be, Mg, Ca, Sr, Si, Sb, Pb, In, Zn, Ba, Ra, Ge, Al, V, Ti, et Sn ; un composite de carbone et de Cu, Ni, Na, K, Rb, Cs, Fr, Be, Mg, Ca, Sr, Si, Sb, Pb, In, Zn, Ba, Ra, Ge, Al, V, Ti, et Sn ; et un oxyde d'au moins un métal ou métalloïde sélectionné dans le groupe consistant en Li, Cu, Ni, Na, K, Rb, Cs, Fr, Be, Mg, Ca, Sr, Si, Sb, Pb, In, Zn, Ba, Ra, Ge, Al, V, Ti, et Sn.

6. Électrode négative selon la revendication 1, dans laquelle le second matériau actif d'électrode négative comprend au moins un matériau actif à base de silicium sélectionné parmi SiOₓ, dans laquelle 0≤x<2, et un composite silicium-carbone.

7. Électrode négative selon la revendication 1, dans laquelle le second matériau actif d'électrode négative comprend un oxyde de lithium et de titane.

8. Électrode négative selon la revendication 1, dans laquelle le collecteur de courant d'électrode négative (100) comprend des parties non revêtues situées sur les deux côtés, dans lesquelles la première couche (200) de matériau actif d'électrode négative et les secondes couches (300a, 300b) de matériau actif d'électrode négative ne sont pas disposées,
dans laquelle les parties latérales (210a, 210b) sont adjacentes aux parties non revêtues, et la partie centrale (220) est espacée des parties non revêtues.

9. Batterie secondaire comprenant :
l'électrode négative selon la revendication 1 ;
une électrode positive ;
un séparateur disposé entre l'électrode négative et l'électrode positive ; et
un électrolyte.
